# FASCICULE DE BREVET EUROPEEN

(11) **EP 1 048 623 B1**
(45) Date de publication et mention de la délivrance du brevet: **27.10.2004**
(21) Numéro de dépôt: 00401136.7
(22) Date de dépôt: 25.04.2000
(51) Int. Cl.: C03B 37/012, G02B 6/16, G02B 6/44

(54) **Préforme comprenant un revêtement barrière contre la diffusion d'hydrogène dans la fibre optique fabriquée à partir de cette préforme, et procédé de préparation d'une telle préforme**
Vorform mit Wasserstoffundurchlässigerlage bei einer optischen Faser die aus dieser Vorform hergestellt wurde und Herstellungsverfahren einer solchen Vorform
Preform with a barrier layer against hydrogen diffusion in an optical fibre started from the preform and preparation process of this preform

(30) Priorité: 26.04.1999 FR 9905242
(43) Date de publication de la demande: 02.11.2000
(73) Titulaire: ALCATEL, 75008 Paris (FR)
(72) Inventeur: Orcel, Gérard, 78600 Maison Lafitte (FR); Dubois, Sophie, 78100 Saint Germain en Laye (FR); Campion, Jean-Florent, 78700 Conflans St. Honorine (FR)
(74) Mandataire: Blokland, Arie

(56) Documents cités:
- EP-A- 0 936 194
- GB-A- 2 145 840
- US-A- 4 540 601

## Description

La présente invention concerne une préforme de fibre optique à base de silice comprenant un coeur, de rayon R, et une gaine, ladite gaine comprenant une partie interne en contact direct avec le coeur, appelée gaine optique, et une partie externe, appelée gaine externe, ladite gaine externe comprenant de la silice dopée par de l'alumine. Elle concerne également le procédé de fabrication de ladite préforme et la fibre optique fabriquée par fibrage à partir de cette préforme.

Les conducteurs optiques sont couramment utilisés dans le domaine des télécommunications. Les informations lumineuses sont généralement transmises à une longueur d'onde d'environ 1300 ou 1550 nanomètres par des fibres optiques à base de silice. Une telle fibre optique est formée d'une partie optiquement active formée d'un coeur, transportant la majeure partie de l'onde lumineuse, et d'une gaine optique, le coeur et la gaine optique étant d'indices de réfraction différents, et le plus souvent d'une partie périphérique externe, appelée gaine externe, non optiquement active, qui forme avec la gaine optique la gaine de la fibre optique. Comme le fibrage d'une préforme en une fibre optique a lieu de façon homothétique, on utilise les mêmes termes de coeur, gaine optique et gaine externe pour la préforme à partir de laquelle est fabriquée la fibre optique. Chaque fibre est protégée par des revêtements en matériau polymère et les revêtements de protection sont le plus souvent recouverts d'un autre revêtement en polymère pigmenté. Un ensemble de fibres optiques peut être assemblé pour former un ruban. Dans ce cas le matériau maintenant ensemble les fibres du ruban, appelé matrice, est également un polymère. Dans un câble de télécommunications, les fibres optiques, individuelles ou en ruban, sont généralement disposées dans un tube métallique ou en matière plastique.

On sait que les fibres optiques ne doivent pas être exposées à l'hydrogène car ce gaz altère leurs propriétés de transmission. L'altération est d'autant plus importante qu'est élevée la pression partielle d'hydrogène à laquelle est soumise la fibre. L'hydrogène provient, notamment, de la décomposition des polymères constituant les revêtements des fibres ou la matrice du ruban. Il peut aussi provenir de la décomposition du produit de remplissage généralement prévu dans le câble afin de permettre le maintien des fibres dans le tube contenant les fibres optiques et de s'opposer à la progression de l'humidité en cas de rupture ou dégradation du tube. Les décompositions mentionnées ci-dessus interviennent naturellement du fait du vieillissement.

Le brevet GB-B-2.145.240 mentionne la fabrication d'une fibre optique par fibrage à partir d'une préforme optique, et décrit ladite fibre optique comprenant une partie optiquement active, formée d'un coeur et d'une gaine optique d'indices de réfraction différents, et une gaine externe comprenant en plus de la silice un dopant qui appartient à une liste d'oxydes. Parmi la liste d'oxydes l'alumine est citée et l'oxyde de bore est préféré. Il n'est pas précisé le procédé de réalisation de la préforme ni la structure d'une telle préforme. La structure de la fibre optique finale, est donnée en exemple et illustrée par une figure. Ladite fibre optique comprend un coeur, de rayon R, de silice dopée de diamètre 50 µm, correspondant à 2 R, et autour une gaine portant le diamètre de la fibre optique à 125 µm, soit 5 R, comprenant une gaine optique portant le diamètre à 90 µm, soit 3,6 R, et une gaine externe, d'épaisseur égale à 17,5 µm, soit 0,7 R. La concentration d'oxyde dans ladite gaine externe est de préférence comprise entre 1 et 20 % en poids d'oxyde par rapport au poids de la composition de la gaine externe.

La présence d'une grande quantité d'alumine dans la gaine externe ainsi formée pose un problème de fabrication de la fibre optique issue de la préforme dans des conditions convenables, notamment en termes de stabilité du diamètre lors du fibrage, à cause de la trop faible viscosité de la gaine externe dopée. En effet avec seulement 1% en poids de Al₂O₃ dans la silice, il est difficile de rester dans la fourchette de tolérance généralement admise, qui est de 125 ± 0,5 µm, et l'on se trouve avec une fourchette de tolérance égale à 125 ± 1,5 µm. Cela pose un problème de raccordement des fibres optiques entre elles.

D'autre part, il est important que la gaine externe obtenue soit performante en termes de propriétés mécaniques, et une gaine externe trop épaisse, telle que celle décrite dans le brevet GB-B-2.145.240, peut occasionner des baisses de performance, notamment en test de traction.

La présente invention a pour but de permettre la fabrication industrielle d'une fibre optique qui est pratiquement imperméable à l'hydrogène et qui possède une tenue mécanique correcte.

A cet effet, l'invention concerne une préforme de fibre optique à base de silice telle que définie dans la revendication 1.

De préférence, la proportion en poids d'alumine dans la zone périphérique est telle que la concentration équivalente d'alumine dans toute la gaine externe est comprise entre 100 et 500 ppm en poids d'aluminium par rapport à la silice.

De préférence, l'épaisseur de la zone périphérique est comprise entre 0,08 R et 1,5 R.

La concentration équivalente se définit comme la quantité d'alumine contenue dans la zone périphérique, rapportée en % poids au volume de toute la gaine externe (et non seulement au volume de la zone périphérique), la zone interne ne comprenant pas d'alumine. Le fibrage de la préforme en fibre optique ayant généralement lieu de façon homothétique, la concentration équivalente dans la préforme et dans la fibre optique est la même. A titre d'exemple, la concentration minimale de 1% en poids d'alumine par rapport à l'ensemble de la composition de la gaine externe, dans le cas du brevet GB-B-2.145.240, donne une concentration de 1,01% en poids d'alumine par rapport à la silice de la gaine externe. Ce qui donne alors 10100 ppm de concentration équivalente, en % poids d'alumine par rapport à la silice contenue dans la gaine externe. Ainsi, le rapport masse molaire d'alumine sur masse molaire d'aluminium étant égal à 1,888, le calcul donne environ 5350 ppm de concentration équivalente d'alumine, en poids d'aluminium par rapport à la silice contenue dans la gaine externe.

La concentration en alumine de la zone périphérique est généralement constante sur toute l'épaisseur de ladite zone périphérique, mais elle peut aussi être radialement variable, de façon continue ou discontinue.

La préforme de fibre optique selon l'invention met en valeur une plage de concentration et d'épaisseur d'alumine au sein de la gaine externe qui pallie les inconvénients de l'art antérieur, c'est-à-dire que la gaine externe obtenue est performante en termes de propriétés mécaniques et a une viscosité telle que la fabrication de la fibre optique à partir de ladite préforme s'effectue de façon convenable, et notamment avec un diamètre de fibre optique stable dans la fourchette de tolérance généralement admise.

La préforme selon l'invention présente avantageusement une zone périphérique de silice dopée par de l'alumine qui, transformée de façon pratiquement homothétique par le fibrage, donnera une grande résistance mécanique à la fibre optique fabriquée à partir de ladite préforme. A noter qu'une telle zone périphérique est généralement de rugosité relativement faible car une telle zone est fondue lors du fibrage.

D'autre part l'épaisseur modérée de la zone périphérique précurseur d'une zone périphérique de la fibre optique fabriquée à partir de ladite préforme, permet d'obtenir une zone périphérique en compression, ce qui améliore grandement les propriétés mécaniques de ladite fibre optique. En effet, une zone en compression se définit comme présentant une contrainte longitudinale ayant pour effet de comprimer la zone. Or la mécanique de rupture des verres montre que le principal mécanisme de rupture réside dans la création et la propagation de fissures superficielles. La mise en compression de la surface de la fibre a pour conséquence d'éviter un tel phénomène de propagation.

Enfin le fait de réaliser une zone périphérique relativement éloignée du coeur optique de la préforme permet avantageusement de bloquer l'hydrogène le plus loin possible de la partie optiquement active, et ainsi de limiter au maximum les risques d'augmentation de l'atténuation de la fibre optique fabriquée à partir de ladite préforme.

L'invention concerne aussi un procédé de fabrication de la préforme de fibre optique à base de silice selon l'invention décrite précédemment,
**caractérisé en ce que** l'on réalise ladite zone périphérique par dépôt externe d'au moins une couche de silice dopée par de l'alumine.

Le procédé selon l'invention présente l'avantage de permettre la localisation très précise de la zone périphérique dopée en alumine, par des techniques de dépôt bien connues de l'homme du métier. Le procédé selon l'invention présente aussi l'avantage de permettre un dépôt de binaire alumine-silice amorphe. La nature amorphe du binaire en fait une bonne barrière à la diffusion de l'hydrogène. Par contre, un binaire alumine-silice cristallin, par des joints de grains ou par des canaux de diffusion à l'intérieur du cristal, qui sont des zones de moindre densité électronique, laisse passer de l'hydrogène à l'intérieur de la fibre optique fabriquée à partir de la préforme.

Selon un mode de réalisation du procédé selon l'invention, le dépôt externe est réalisé par recharge plasma. La fabrication de la préforme par une technique de dépôt externe, latéral, telle que la technique de recharge plasma est connue, et décrite par exemple dans la demande de brevet EP-A1-0.450.465. Selon un autre mode de réalisation du procédé selon l'invention, le dépôt externe est réalisé par OVD (acronyme de "Outside Vapor Deposit"). Le procédé de dépôt externe peut aussi être réalisé par d'autres procédés tels que les procédés sol-gel, les imprégnations, les dépôts à la vapeur ou les évaporations.

L'invention concerne enfin la fibre optique fabriquée par fibrage d'une préforme selon l'invention.

La préforme selon l'invention est telle qu'avantageusement la fabrication de fibre optique à partir de ladite préforme est compatible avec les vitesses de fibrage le plus souvent utilisées en fabrication de fibre optique sur une tour de fibrage, lesquelles vitesses sont généralement de l'ordre de plusieurs centaines de mètres par minute. De plus, un tel dépôt permet de préserver l'installation de la tour de fibrage existante, puisque c'est sur la préforme que l'on agit. D'autre part un tel dépôt est compatible avec les conditions de fibrage industriel, et notamment la tolérance sur le diamètre de la fibre optique pour la régulation du procédé de fibrage.

L'invention sera mieux comprise et d'autres caractéristiques et avantages apparaîtront à la lecture de la description qui va suivre, donnée à titre non limitatif, par référence aux figures 1 à 3.

La figure 1 représente une vue en coupe schématique d'une préforme de fibre optique obtenue selon le procédé selon l'invention, à partir d'une préforme primaire réalisée par le procédé MCVD.

La figure 2 représente de façon très schématique un dispositif de recharge plasma dans lequel est mis en oeuvre le procédé de l'invention.

La figure 3 représente une vue en coupe schématique d'une fibre optique obtenue à partir de la préforme 3 représentée sur la figure 2.

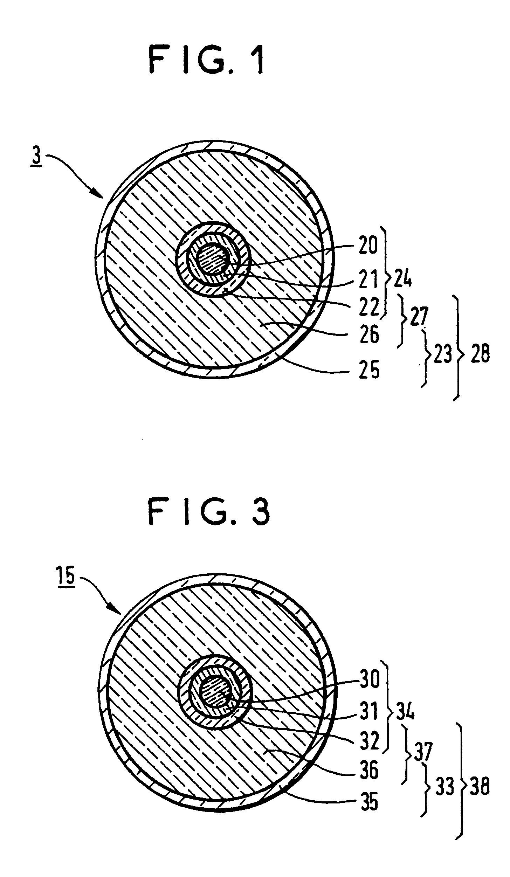

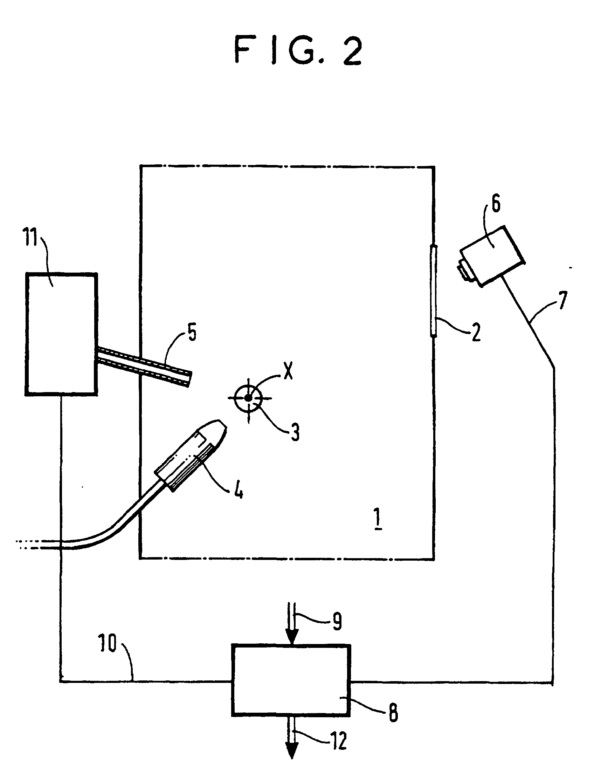

Une préforme primaire 24, représentée sur la figure 1, est réalisée par exemple selon le procédé MCVD par dépôt interne de couches à base de silice éventuellement dopée formant un coeur optique 20 et une gaine optique 21 dans un tube 22, suivi d'une transformation, par rétreint, du tube ainsi intérieurement revêtu en un barreau qui est la préforme primaire 24, puis une préforme (finale) 3 est réalisée par dépôt externe à base de silice de couches de dépôt externe formant une zone de recharge 23 sur la préforme primaire 24. On utilise de préférence un tube 22 de silice ultra pure. Un tel dépôt externe est explicité à la figure 2 dans le cas d'une recharge plasma.

La formation d'une zone de recharge 23, représentée sur la figure 1, commence lorsque la silice est déposée sous forme de grains sur la préforme primaire 24. En présence de plasma, les grains de silice sont simplement déposés par gravité à partir d'un conduit d'alimentation qui est une buse 5 et qui est déplacé en translation parallèlement à la préforme primaire 24. Les grains de silice sont fusionnés puis vitrifiés sous une température de l'ordre de 2300 °C par le plasma. L'opération de recharge s'effectue dans une cabine close pour assurer une protection contre des perturbations électromagnétiques et contre un dégagement d'ozone émis par une torche à plasma 4.

Selon l'invention, on dépose d'abord des particules de silice par la buse 5, formant une partie 26 de la zone de recharge 23, qui est de composition pratiquement identique à celle du tube 22, i.e. en silice ultra pure. L'ensemble de la partie 26 et du tube 22 forme une zone interne 27 d'une gaine externe 28. Puis on dépose des particules d'alumine mélangées aux grains de silice dans la buse 5, dans une zone périphérique 25 de la recharge 23, comprenant les toutes dernières couches de dépôt externe de la zone de recharge 23. Il est aussi possible d'envoyer la silice par un premier conduit d'alimentation et les particules d'alumine par un second conduit d'alimentation, lesquels conduits débouchent à proximité de la torche à plasma 4 sensiblement près du premier conduit 5 d'alimentation en silice. Comme indiqué précédemment, l'introduction des particules d'aluminium dans la zone périphérique 25 de la zone de recharge 23 permet la fabrication industrielle d'une fibre optique 15 lors de l'étirage à chaud, laquelle fibre optique possède une résistance à l'hydrogène améliorée par rapport aux fibres optiques selon l'art antérieur. On aboutit ainsi à une préforme rechargée 3 selon l'invention, comprenant une zone de recharge 23 comportant une partie 26 et une zone périphérique 25. La gaine externe 28 de ladite préforme 3 est formée du tube 22, et de la zone de recharge 23 comprenant la partie 26 et la zone périphérique 25. Selon un mode de réalisation de l'invention, il est possible de doper, avec une proportion d'alumine inférieure à celle de la zone 25, la partie 26 de la zone de recharge 23. Les particules d'alumine sont introduites dans une proportion relative par rapport aux grains de silice qui est fonction de la pureté en silice des grains et du tube 22 de la préforme primaire 24.

La figure 2 représente de façon très schématique un dispositif de recharge plasma, comprenant une enceinte 1, pourvue d'une fenêtre transparente 2, une préforme 3 vue de bout, d'axe longitudinal X, vers laquelle sont dirigées la torche à plasma 4 et la buse 5 d'alimentation en grains de recharge. A l'extérieur de l'enceinte 1, une caméra CCD 6, disposée derrière la fenêtre 2, est pointée sur la préforme 3. Elle fournit une mesure du diamètre de la préforme, à l'endroit où elle est pointée, sous la forme d'une valeur transmise par une liaison 7 à un dispositif 8 de commande du processus de recharge. Le dispositif 8 reçoit, par une liaison multiple 9, d'autres indications sur des conditions du processus de recharge. Sous l'effet d'un programme interne de conduite du processus de recharge, le dispositif 8 fournit, à débit de grains constant, sur une liaison de sortie 10 alimentant un dispositif de commande 11, une valeur de commande du positionnement de la buse 5 par rapport à la préforme 3, qui positionne en conséquence la buse 5 par déplacement de ladite buse 5 le long d'un axe parallèle à l'axe X. Le dispositif 8 fournit aussi, sur une liaison multiple de sortie 12, d'autres valeurs de commande déterminant d'autres aspects du processus de commande.

Tous les éléments du dispositif illustré par la figure 2 sont bien connus de l'homme du métier. D'autres, qui ne sont pas représentés, sont également bien connus. C'est ainsi que des moyens de support de la préforme 3, avec entraînement en rotation et en translation, un chariot de support de la torche à plasma 4 et de la buse 5, avec entraînement en translation, parallèlement à l'axe X, des moyens d'évaluation de la position angulaire de la préforme 3 et de la position longitudinale du chariot sont par exemple décrits dans la demande de brevet européen EP-A1-0.440.130. Tous ces moyens permettent de façon connue d'éloigner la préforme 3 de la torche 4 au fur et à mesure du grossissement de la préforme 3. Des moyens permettant de pointer la caméra 6 en des endroits successifs de la préforme 3 dans une passe de mesure, qui pourraient prendre la forme d'un second chariot au déplacement couplé avec celui du premier chariot, appartiennent également à la technique connue.

La recharge plasma s'opère par passes, de droite à gauche, puis de gauche à droite, au cours desquelles la torche à plasma 4 et la buse 5 balaient la longueur de la préforme 3.

Tout le processus de commande est optimisé pour obtenir un rendement important de la quantité de dépôt de silice, à vitesse de translation donnée et pour un profil d'indice de réfraction de la recharge donné. Simultanément la caméra 6 opère une passe de mesure, fournissant des valeurs successives du diamètre de la préforme 3 sur toute sa longueur.

La figure 3 représente une vue en coupe schématique d'une fibre optique 15 obtenue à partir de la préforme 3, de façon pratiquement homothétique.

La fibre optique 15 est fabriquée par étirage à chaud, à partir de la préforme primaire rechargée 3 selon l'invention. On y distingue un coeur optique 30 et une gaine optique 31, formant tous deux la partie optiquement active à base de silice, une zone 32, et une zone de recharge 33 composée d'une partie 36 ainsi que d'une zone périphérique 35 en silice dopée par de l'alumine. Par rapport à la figure 1, la zone 32 correspond au tube 22, une zone 34 correspond à la préforme primaire 24, une zone 37 correspond à la zone interne 27 et une zone 38 correspond à la gaine externe 28. Si la partie 36 n'est pas dopée intentionnellement, elle peut contenir de l'alumine selon sa provenance, de teneur inférieure à celle de la zone périphérique 35.

Les exemples qui suivent illustrent l'invention, sans pour autant en limiter la portée.

### Exemples

### Exemple 1 : Utilisation de l'alumine en concentration équivalente égale à environ 381 ppm

La préforme primaire est un barreau de diamètre 9 R soit de rayon 4,5 R sur lequel on effectue la recharge plasma, le tube 22 étant réparti entre le rayon 2,9 R et le rayon 4,5 R. On dépose d'abord une couche de silice pure sur une épaisseur de 7,7 R, transformant la préforme primaire en un barreau de rayon 12,2 R. Puis on réalise une zone périphérique d'épaisseur 1,3 R comprenant de l'alumine, réalisant la préforme 3 de diamètre 13,5 R. On utilise une concentration de 2000 ppm de particules d'alumine Al₂O₃, en proportion en poids d'aluminium par rapport à de la silice naturelle, pour recharger la préforme primaire 24, sur une épaisseur 25 de la zone de recharge 23. La concentration équivalente d'un tel dépôt de zone périphérique 25 est alors égale à environ 381 ppm en poids d'aluminium par rapport à de la silice naturelle, pour toute la zone de recharge 23.

Il est prévu d'utiliser des particules d'alumine de qualité ultra pure dont la taille maximale est typiquement de quelques dizaines de micromètres (µm). De préférence, on utilise des particules d'alumine pyrogénée dont la taille est inférieure à 0,1 µm pour favoriser une distribution homogène des particules dans la partie 25 de la zone de recharge 23.

La fibre optique 15 est fabriquée par étirage à chaud sous une tension de fibrage de 85 g, à partir de la préforme primaire rechargée 3 selon l'invention. De façon générale, la tension de fibrage est entre 10 et 250g, de préférence entre 30 et 150 g.

Les performances de ladite fibre optique 15 sont ensuite testées en perméabilité à l'hydrogène, pendant 400 heures à 70 °C sous une atmosphère (1 atm = 1,01325.10⁵ Pa). L'atténuation à 1550 nm obtenue par la fibre 15 ayant subi le test est de 0,048 dB/km. Par rapport à une fibre optique standard fabriquée dans des conditions identiques sauf qu'il n'y a pas d'alumine dans une zone périphérique 34 de la recharge, et qui possède une atténuation après le test à l'hydrogène égale à 0,07 dB/km, le gain en incrément d'atténuation est d'environ 31%.

D'autre part, les performances de ladite fibre 15 sont testées en test de résistance à la traction ou test de traction. Un tel test est un test normalisé, qui consiste à étirer la fibre et à mesurer la force nécessaire à la rupture de celle-ci. Le test se réalise sur 50 fibres et une distribution statistique est obtenue. Dans cette distribution, la médiane pour la fibre 15 est de 60 newtons, à comparer à 57 newtons pour la fibre optique standard définie ci-dessus, soit de 5 à 10 % de gain par rapport à ladite fibre optique standard.

Enfin le profil de contrainte de ladite fibre 15 est déterminé en mesure de mise en compression de la surface, se basant sur une méthode fondée sur la biréfringence. La biréfringence est mesurée par la différence de marche entre les polarisations se propageant selon l'axe rapide et l'axe lent de la fibre en utilisant une méthode optique, dérivée de la méthode dite de la lame quart d'onde. La mise en compression de la surface est de 40 MPa sur 5 µm, à comparer à la valeur de mise en compression de la fibre optique standard définie ci-dessus qui est égale à 5 MPa sur 5 µm, la précision de la mesure étant estimée à ± 10 %.

### Exemple 2 : Utilisation de l'alumine en concentration équivalente égale à environ 762 ppm

La préforme primaire 24 est un tube de diamètre 9 R soit de rayon 4,5 R sur lequel on effectue la recharge plasma, le tube 22 étant réparti entre le rayon 2,9 R et le rayon 4,5 R. On dépose d'abord une couche de silice pure sur une épaisseur de 7,7 R, transformant la préforme primaire en un barreau de rayon 12,2 R. Puis on réalise une zone périphérique d'épaisseur 1,3 R comprenant de l'alumine, réalisant la préforme 3 de diamètre 13,5 R. On utilise une concentration de 4000 ppm de particules d'alumine Al₂O₃, en proportion en poids d'aluminium par rapport à de la silice naturelle, pour recharger la préforme primaire 24, dans la zone périphérique 25 de la zone de recharge 23. La concentration équivalente d'un tel dépôt de zone périphérique 25 est alors égale à environ 762 ppm en poids d'aluminium par rapport à de la silice naturelle, pour toute la zone de recharge 23.

La source d'alumine est semblable à celle de l'exemple 1. La fibre optique 15 est fabriquée par étirage à chaud sous une tension de fibrage de 85 g, à partir de la préforme primaire rechargée 3 selon l'invention, de la même façon qu'à l'exemple 1.

Les performances de ladite fibre optique 15 sont ensuite testées en perméabilité à l'hydrogène, pendant 400 heures à 70 °C sous une atmosphère (1 atm). L'atténuation à 1550 nm obtenue par la fibre 15 ayant subi le test est de 0,049 dB/km. Par rapport à une fibre optique standard fabriquée dans des conditions identiques sauf qu'il n'y a pas d'alumine dans une zone périphérique 34 de la recharge, et qui possède une atténuation après le test à l'hydrogène égale à 0,07 dB/km, le gain en incrément d'atténuation est d'environ 30%.

Bien entendu le procédé selon l'invention ne se limite pas aux représentations décrites ci-dessus. En particulier, il est utilisable pour les procédés de recharge plasma, mais aussi pour d'autres procédés tel que l'OVD, les procédés sol-gel, les imprégnations, les dépôts à la vapeur ou les évaporations.

## Revendications

1. Préforme (3) de fibre optique à base de silice comprenant un coeur (20), de rayon R, et une gaine, ladite gaine comprenant une partie interne en contact direct avec le coeur, appelée gaine optique (21), et une partie externe, appelée gaine externe (28), ladite gaine externe comprenant de la silice dopée par de l'alumine, **caractérisée en ce que** la gaine externe comprend elle-même une partie interne en contact direct avec la gaine optique, appelée zone interne (27) laquelle ne comprend pas d'alumine , et une partie externe en contact direct avec la zone interne, appelée zone périphérique (25), ladite zone périphérique (25) comprenant principalement de la silice dopée par de l'alumine, **en ce que** l'épaisseur de ladite zone périphérique (25) est comprise entre 0,08 R et 2,2 R **et en ce que** la proportion en poids d'alumine dans la zone périphérique (25) est telle que la concentration équivalente d'alumine dans toute la gaine externe est comprise entre 100 et 1000 ppm en poids d'aluminium par rapport à la silice , la concentration équivalente étant la quantité d'alumine contenue dans la zone périphérique, rapportée en % poids au volume de toute la gaine externe .

2. Préforme (3) selon la revendication 1 telle que la proportion en poids d'alumine dans la zone périphérique (25) est telle que la concentration équivalente d'alumine dans toute la gaine externe (28) est comprise entre 100 et 500 ppm en poids d'aluminium par rapport à la silice.

3. Préforme (3) selon l'une des revendications 1 ou 2 telle que l'épaisseur de la zone périphérique (25) est comprise entre 0,08 R et 1,5 R.

4. Procédé de fabrication de la zone périphérique d'une préforme (3) selon l'une des revendications 1 à 3 **caractérisé en ce que** l'on réalise ladite zone périphérique (25) par dépôt externe d'au moins une couche de silice dopée par de l'alumine.

5. Procédé selon la revendication 4 tel que le procédé de dépôt externe est réalisé par recharge plasma.

6. Procédé selon la revendication 4 tel que le procédé de dépôt externe est réalisé par OVD.

7. Fibre optique (15) fabriquée par étirage à chaud d'une préforme (3) selon l'une des revendications 1 à 3 ou fabriquée selon l'une des revendications 4 à 6 .

## Patentansprüche

1. Vorform (3) einer Lichtleitfaser aus Siliciumoxid, welche einen Kern (20) vom Radius R sowie einen Mantel beinhaltet, wobei besagter Mantel einen mit dem Kern in direktem Kontakt stehenden Innenteil, der als optischer Mantel (21) bezeichnet wird, sowie einen als äußeren Mantel bezeichneten Außenteil aufweist, welcher aus mit Aluminiumoxid dotiertem Siliciumoxid besteht, **dadurch gekennzeichnet, daß** der äußere Mantel seinerseits einen mit dem optischen Mantel in direktem Kontakt stehenden Innenteil, der als innere Zone (27) bezeichnet wird und kein Aluminiumoxid beinhaltet, sowie einen mit der als Randzone (25) bezeichneten inneren Zone in direktem Kontakt stehenden Außenteil beinhaltet, wobei besagte Randzone (25) in erster Linie mit Aluminiumoxid dotiertes Siliciumoxid aufweist, ferner dadurch, daß die Dicke der besagten Randzone (25) zwischen 0,08R und 2,2R liegt, und dadurch, daß das Gewichtsverhältnis an Aluminiumoxid in der Randzone (25) so bemessen ist, daß die äquivalente Konzentration von Aluminiumoxid im gesamten äußeren Mantel zwischen 100 und 1000 ppm Aluminiumgewicht gegenüber dem Siliciumoxid liegt, wobei die äquivalente Konzentration die in der Randzone enthaltene und in Gewichtsprozenten gegenüber dem Volumen des gesamten äußeren Mantels angegebene Aluminiumoxidmenge ist.

2. Vorform (3) gemäß Anspruch 1, bei welcher das Gewichtsverhältnis von Aluminiumoxid in der Randzone (25) so bemessen ist, daß die äquivalente Konzentration von Aluminiumoxid im gesamten äußeren Mantel (28) zwischen 100 und 500 ppm Aluminiumgewicht gegenüber dem Siliciumoxid liegt.

3. Vorform (3) gemäß einem oder beiden der Ansprüche 1 oder 2, bei welcher die Dicke der Randzone (25) zwischen 0,08R und 1,5R liegt.

4. Verfahren zur Herstellung der Randzone einer Vorform (3) gemäß einem oder mehrere der Ansprüche 1 bis 3, **dadurch gekennzeichnet, daß** die besagte Randzone (25) durch äußeres Aufbringen mindestens einer Schicht von mit Aluminiumoxid dotiertem Siliciumoxid hergestellt wird.

5. Verfahren gemäß Anspruch 4, bei welchem zum Aufbringen der äußeren Schicht das Plasmaauftragverfahren angewandt wird.

6. Verfahren gemäß Anspruch 4, bei welchem zum Aufbringen der äußeren Schicht das OVD-Verfahren angewandt wird.

7. Lichtleitfaser (15), hergestellt durch Faserziehen aus einer Vorform (3) gemäß einem oder mehrere der Ansprüche 1 bis 3 oder hergestellt gemäß einem oder mehrere der Ansprüche 4 bis 6.

## Claims

1. An optical fiber preform (3) based on silica and comprising a core (20) of radius R, and a sheath, said sheath comprising an optical inner portion in direct contact with the core, and referred to as the optical cladding (21), and an outer portion referred to as the outer cladding (28), said outer cladding being produced of silica doped with alumina, being **characterized in that** the outer cladding itself comprises an inner portion in direct contact with the optical cladding and referred to as the inner zone (27), which does not contain alumina, and an outer portion in direct contact with the inner zone and referred to as the peripheral zone (25) mainly comprising silica doped with alumina, **in that** the thickness of said peripheral zone (25) lies in the range 0.08 R to 2.2 R, and **in that** the proportion by weight of alumina in the peripheral zone (25) is such that the equivalent concentration of alumina in the outer cladding as a whole lies in the range of 100 ppm to 1000 ppm by weight of aluminum relative to silica, the equivalent concentration being the quantity of alumina contained in the peripheral zone in % weight of the volume of the outer cladding as a whole.

2. The preform (3) according to claim 1, in which the proportion by weight of alumina in the peripheral zone (25) is such that the equivalent concentration of alumina in the outer cladding (28) as a whole lies in the range 100 ppm to 500 ppm by weight of aluminum relative to silica.

3. The preform (3) according to claim 1 or 2, in which the thickness of the peripheral zone (25) lies in the range 0.08 R to 1.5 R.

4. A method of manufacturing the peripheral zone of a preform (3) according to any one of claims 1 to 3, said method being **characterized in that** said peripheral zone (25) is formed by externally depositing at least one layer of silica doped with alumina.

5. The method according to claim 4, in which the external deposition method is performed by plasma building-up.

6. The method according to claim 4, in which the external deposition method is performed by 0VD.

7. An optical fiber (15) manufactured by performing hot fiber-drawing on a preform (3) according to any one of claims 1 to 3, or manufactured according to the method of any one of claims 4 to 6.
